# EUROPEAN PATENT APPLICATION

(11) **EP 2 485 030 A1**
(43) Date of publication of application: **08.08.2012**
(21) Application number: 12152995.2
(22) Date of filing: 30.01.2012
(51) Int. Cl.: G01M 3/22

(54) **Device for detetcting gas leaks, particualrly for joints of pipes and the like**

(30) Priority: 02.02.2011 IT MI20110132
(71) Applicant: Noci, Egidio, 24043 Vidalengo di Caravaggio BG (IT)
(72) Inventor: Noci, Egidio, 24043 Vidalengo di Caravaggio BG (IT)
(74) Representative: Modiano, Micaela Nadia

(57) **Abstract**

A device (1) for detecting gas leaks, particularly for joints of pipes and the like, comprising at least one aspirator (2a, 2b, 2c), which can be coupled to a joint (3) of a pipe (4) through which a tracer gas flows, and adapted to take a sample of the air surrounding the joint (3); moreover, the aspirator (2a, 2b, 2c) is functionally connected to a leak detection machine (6) which is adapted to analyze the air sample taken by the aspirator (2a, 2b, 2c), in order to determine the presence and concentration of the tracer gas within the air sample, so as to verify the seal of the joint (3); the device further comprises an accumulation chamber (7) which is defined inside the aspirator (2a, 2b, 2c) and is adapted to accommodate part of the pipe (4) at the joint (3) and it further comprises means (21) for detecting the pipe (4) in the accumulation chamber (7) which are functionally connected to a measurement assembly (5) in order to take the sample in the presence of the pipe (4) accommodated in the accumulation chamber (7).

## Description

The present invention relates to a device for detecting gas leaks, particularly for joints of pipes and the like.

As is known, after performing welds or braze welds on pipes it is necessary to check the quality of the joints with the detection of any gas leaks through the joints of the pipe by way of a tracer gas made to flow expressly through the pipe to be checked.

Usually, such check is performed manually with a "sniffer probe" by a specialist operator who is often called on to decide on the spot whether the concentration of gas found by the measurement performed is to be considered a gas leak or whether the value can be deemed acceptable.

More precisely, such "sniffer probe" consists of a thin barrel device on the end whereof is an aspirating nozzle which is placed proximate to the joint to be tested in order to take an air sample which is sent, subsequently, to a leak detection machine.

Such leak detection machine analyzes the air sample and provides a response to the operator on the composition of the air sample and on the concentrations of the individual gases that make it up, leaving the approval of the joint to the operator.

Such conventional "sniffer probe" is not devoid of drawbacks among which is the fact that, the sample being taken in the open air, the air sample is contaminated by the gases present in the air of the environment in which the check is being conducted.

In this manner, if in the room there are traces of tracer gas which do not come from the joint to be checked but from other sources, the verdict of the check will be positive and thus the joint analyzed, although good, will be considered defective.

Another drawback of such conventional "sniffer probe" consists in that it requires a high level of specialist experience on the part of the operator in order to understand the verdict of the leak detection machine and approve the joint.

A further drawback of such conventional "sniffer probe" consists in that it requires a considerable length of dead time in order to be able to carry out a complete analysis of several joints. This is because, for each measurement made, the operator necessarily has to stop in order to consult the verdict provided by the leak detection machine.

More precisely, the prior art, with regard to apparatuses for the detection of gas leaks, comprises several apparatuses, some of which are disclosed in DE 202.19.887 U1, JP 4.034328 A, US 4,727,749 A, US 4,557,139 A and US 5,309,752.

Such documents substantially disclose apparatuses that comprise an accumulation chamber, constructed or mounted with a certain degree of complexity around a portion of pipe to be checked, in which a sniffer probe is present which takes the air sample to be analyzed.

In particular, DE 202.19.887 U1 provides for the deployment of the fixed accumulation chamber around the pipe to be checked while a fluid to be detected circulates therein.

This means that, if the pipe has a leak, the fluid is dispersed in the surrounding environment without it being detected outside the pipe.

JP 4.034328 A and US 5,309,752 disclose laboratory tests in which accumulation chambers are used which, in terms of application methods and times, are not adapted to a detection in series of pipes.

In recent years, in order to improve the quality and the sensitivity of this type of check, while reducing to the minimum the time for deploying the accumulation chamber, a sampling device has been devised consisting of an alligator clamp which has on its jaws two half-shells adapted to define an accumulation chamber within which an aspirator is placed and inside which the joint to be checked is positioned simply by opening the jaws and closing them again with the pipe interposed between them.

In this manner, if the pipe with the joint is correctly positioned, the latter is isolated from the outside environment and the air sample taken will not be contaminated by the gases present in the outside environment, thus providing a more reliable measurement.

At any rate, in order to perform correct measurements, the operator must still work with the utmost care in order to be able to correctly position the pipe in the clamp without leaving openings between the jaws through which the entry and/or outflow of unwanted gases could occur, thus increasing the attention required of the operator compared to "sniffer probes" with no accumulation chamber.

Moreover, since the analysis of the verdict of the leak detection machine is performed by the operator, the latter must in any case be very well-trained and qualified to interpret the results obtained.

Moreover, the step of interpreting and approving the examined joint takes useful time away from any subsequent samplings.

To sum up, the devices described up to now suffer a common drawback which consists in that they involve a considerable waste of time in order to carry out the verification of the joint or pipe to be checked. This time is substantially due to the shape of the accumulation chambers used, and the too many operations that the operator is required to perform.

In addition, if the joint or the pipe should not be placed within the accumulation chamber, it is possible that the operator might accidentally activate the measurement machine thus causing a buildup of air in the pipes of the machine proper, thus altering the measurement once the pipe is placed within the accumulation chamber.

The aim of the present invention consists in providing a device for detecting gas leaks, particularly for joints of pipes and the like, that solves and overcomes, respectively, the drawbacks and the limitations of the prior art, thus proving extremely simple and effective in operation even by operators who are not specialists and/or experts in the field.

Within this aim, an object of the present invention is to provide a device for detecting gas leaks that is capable of offering the widest guarantees of reliability and safety in use, by providing measurements with a high level of sensitivity and free from errors deriving from the lack of experience and/or negligence of the operator.

Another object of the invention consists in providing a device for detecting gas leaks that gives rapid and reliable measurements, thus saving the operator time that can be used for other sampling operations.

Another object of the invention consists in providing a device for detecting gas leaks that is easy to implement and economically competitive when compared to the prior art.

This aim and these and other objects which will become better apparent hereinafter are achieved by a device for detecting gas leaks, particularly for joints of pipes and the like, comprising at least one aspirator, which can be coupled to a joint of a pipe through which a tracer gas flows, is adapted to take a sample of the air surrounding said joint and is functionally connected to a leak detection machine which is adapted to analyze said air sample taken by said at least one aspirator in order to determine the presence and concentration of said tracer gas within said air sample, **characterized in that** it comprises an accumulation chamber which is defined inside said aspirator and is adapted to accommodate part of said pipe at said joint, means being further comprised for detecting said pipe in said accumulation chamber which are functionally connected to a measurement assembly in order to take the sample in the presence of said pipe accommodated in said accumulation chamber.

Further characteristics and advantages of the invention will become better apparent from the description of a preferred, but not exclusive, embodiment of a device for detecting gas leaks, particularly for joints of pipes and the like, which is illustrated by way of non-limiting example in the accompanying drawings, wherein:
Figure 1 is a schematic view of an embodiment of a device for detecting gas leaks, particularly for joints of pipes and the like, according to the present invention;
Figure 2 is a partially sectional side view of an aspirator of the device for detecting gas leaks, according to the present invention, before the association thereof with the joint to be checked;
Figure 3 is a partially sectional side view of the aspirator shown in Figure 2 during the association thereof with the joint to be checked;
Figure 4 is a partially sectional side view of the aspirator shown in Figure 2 after association with the joint to be checked;
Figure 5 is a plan view of the aspirator shown in Figure 2 after association with the joint to be checked.

With reference to the figures, a device for detecting gas leaks, particularly for joints of pipes and the like, generally designated with the reference numeral 1, comprises one or more aspirators 2a, 2b and/or 2c, each one of which can be coupled with a joint 3 of a pipe 4 through which a tracer gas flows, for example helium or refrigerant gases, and is adapted to take a sample of the air surrounding the joint 3.

Moreover, a measurement assembly 5, better described hereinafter, is comprised and functionally connected to the aspirator or aspirators 2a, 2b and/or 2c and functionally associated with a leak detection machine 6 that is adapted to analyze the air sample taken by the aspirator or aspirators 2a, 2b and/or 2c in order to determine the presence and concentration of the tracer gas within the air sample.

As has just been described, in the embodiment proposed, the measurement assembly 5 is interposed between the aspirator or aspirators 2a, 2b and/or 2c and the leak detection machine 6. This does not rule out that in a possible different embodiment of the device 1, less well performing than the proposed embodiment, such measurement assembly 5 may not be present, but the device thus implemented will still fall within the scope of the inventive concept of the present invention.

More specifically, the leak detection machine 6 can consist of a portable apparatus with mass spectrometry, quadrupole, or infrared operation, or of the type of an electronic sensor, capable of defining or analyzing the amount of tracer gas present in the sampled mixture of gases.

According to the invention at least one accumulation chamber 7 is provided which is defined inside each aspirator 2a, 2b and 2c and is adapted to accommodate part of the pipe 4 at the joint 3.

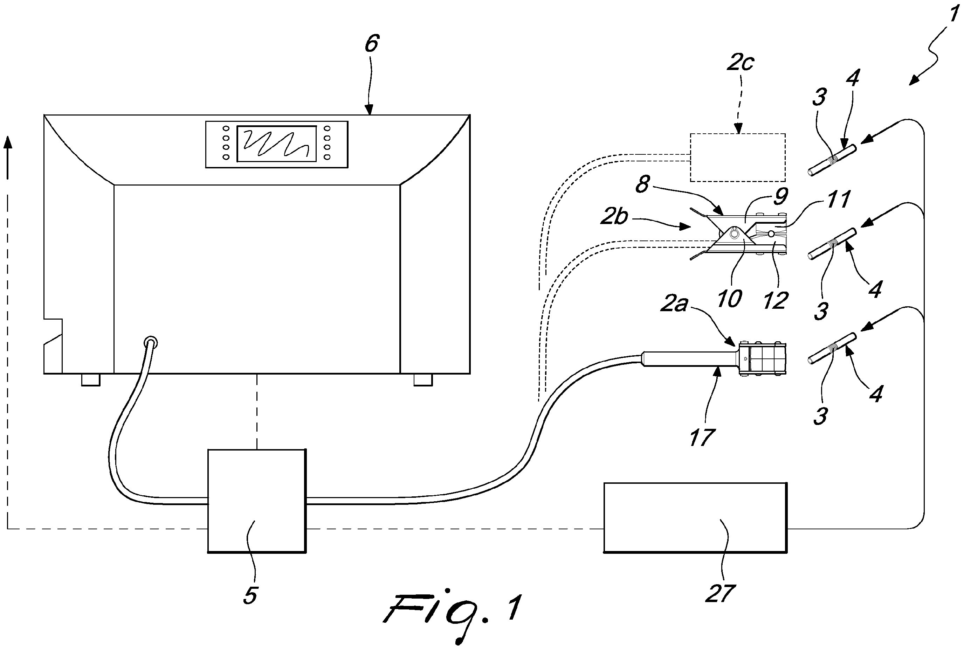

With reference to Figure 1, different aspirators can be provided each comprising at least one accumulation chamber 7 that can be hermetically isolated from the outside environment during the taking of the air sample.

In the embodiment shown, the reference numeral 2c designates a generic aspirator of any type adapted to the product that it is desired to check and ergonomically adapted to the joint that it is desired to inspect. The reference numeral 2b designates an aspirator consisting of a clamp 8 provided on its jaws 9 and 10 with two mutually facing half-shells 11 and 12 which can mutually engage for the definition of the accumulation chamber 7 inside them.

With the latter aspirator 2b, the pipe 4 is interposable between the half-shells 11 and 12 which are contoured in order to be closed hermetically on the pipe 4, thus preventing any type of infiltration of air.

Finally, the reference numeral 2a designates an aspirator in which, advantageously, the accumulation chamber 7 is provided with at least one wall 13 that is elastically deformable and can be switched from a open configuration, for the insertion and extraction of the pipe 4 into and out of the accumulation chamber 7, to a retention configuration, for retaining the pipe 4 within the accumulation chamber 7, and vice versa, after the contact pressure between the pipe 4 and the wall 13 is exceeded with respect to a preset pressure value.

In other words, the pipe 4 is inserted in the accumulation chamber 7 by pushing them against each other until the wall 13, as a result of the pushing, elastically yields thus allowing the insertion of the pipe 4 into the accumulation chamber 7.

Immediately after insertion, owing to the elastic properties of the wall 13, the latter returns to its original configuration.

In order to extract the pipe 4 from the accumulation chamber 7, the operator separates the two by traction, again taking advantage of the elastic properties of the wall 13.

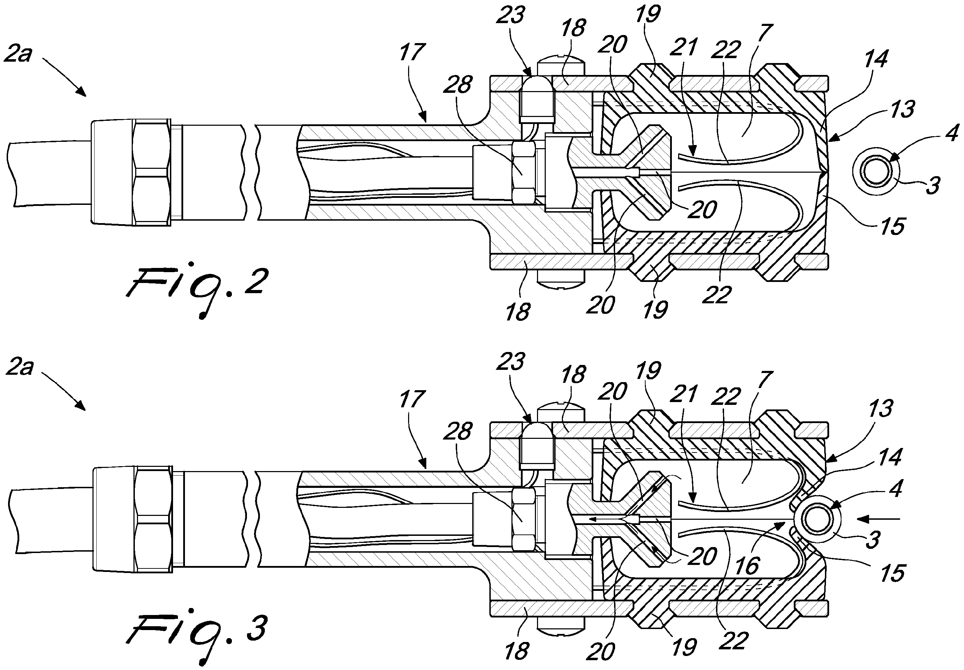

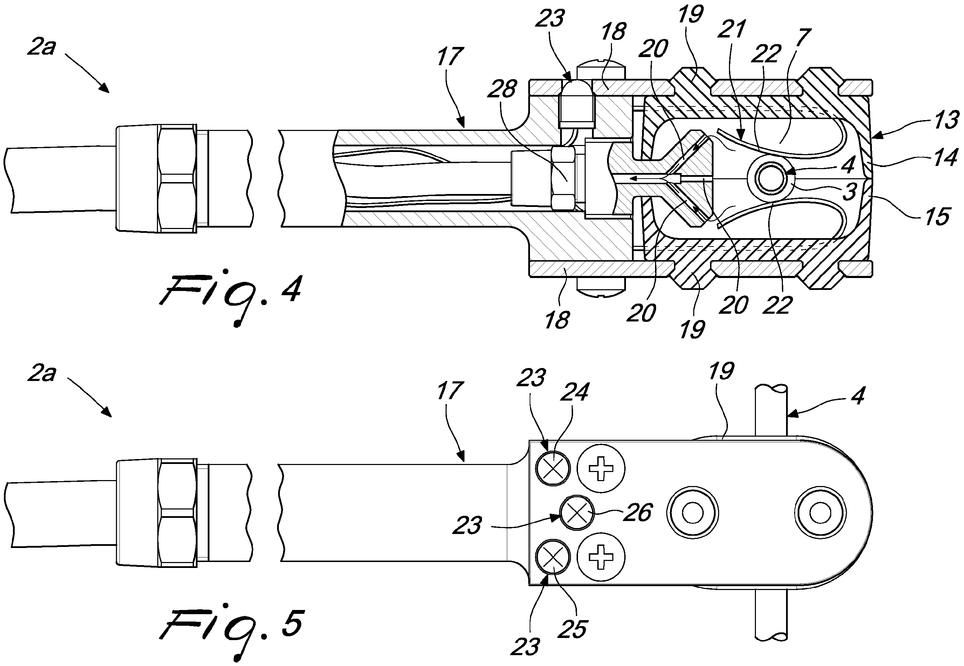

In more detail, in the embodiment proposed, the wall 13 comprises two distinct portions 14 and 15, which are substantially lip-shaped and in mutual contact, in the retention configuration shown in Figures 2 and 4, for retaining the accumulation chamber 7.

Differently, in the open configuration, shown in Figure 3, the two portions 14 and 15 are mutually spaced in order to define an opening 16 for the passage of the pipe 4.

Moreover, the aspirator 2a comprises a slender body 17 that can be gripped by an operator and is provided with an end that is substantially fork-shaped.

More precisely, accommodated between the arms 18 of the forked end is a hollow body 19 made of an elastically deformable material and which defines therein the accumulation chamber 7.

Irrespective of the type of aspirator considered, at least one suction channel 20 leads into the accumulation chamber 7 and is connected with the measurement assembly 5.

Advantageously, a plurality of suction channels 20 is provided which lead into the accumulation chamber 7 and are connected to the measurement assembly 5 for the suction of the air sample.

Such characteristic is advantageous if the accumulation chamber 7 contains a heterogeneous mixture. In this manner the sample is taken at a plurality of points so that the leak detection machine 6 can perform an analysis that is averaged and as reliable as possible.

Conveniently, these suction channels 20 are substantially distributed uniformly in the accumulation chamber 7.

According to the invention, also provided in the accumulation chamber 7 are means 21 of detecting the pipe 4 in the accumulation chamber 7 which are functionally connected to the measurement assembly 5 in order to perform the sampling only in the presence of the pipe 4 when it is accommodated in the accumulation chamber 7.

More precisely, the detection means 21 comprise at least two or four electrically conducting elements 22 which are accommodated within the accumulation chamber 7 so that the pipe 4, when accommodated in the accumulation chamber 7, is in contact with the two electrically conducting elements 22 for the passage of electric current from one element to the other so as to enable the detection of the pipe 4.

Alternatively, in a possible different embodiment of the aspirator 2a, the detection means 21 can consist of a proximity sensor that is magnetic, optical, capacitive, mechanical or other.

Finally, means 23 are provided for reporting leaks of tracer gas, following the analysis performed by the leak detection machine 6 and the conclusion of such analysis.

More precisely, a first LED 24 and a second LED 25 are provided, respectively green and red, which are adapted to tell the operator whether the joint 3 examined has passed the test, and a third LED 26 which is yellow in color and adapted to authorize the operator to mount (steady light) and dismount (flashing light) the aspirator 2a, 2b or 2c onto and from the pipe 4.

The measurement assembly 5, which can be integrated in the leak detection machine 6 or in each aspirator 2a, 2b and 2c, comprises means for the management and control of the aspirator or aspirators 2a, 2b and/or 2c and of the leak detection machine 6 for the automatic operation of the device 1.

More precisely, the control and management means of the measurement assembly 5 comprise:
- systems for controlling the washing and aspiration flows, with measurement of the flow-rate in order to detect the blockage or disconnection of the pipes of the system,
- devices for switching the flows by way of miniaturized valves which can be accommodated inside the aspirator or which can be arranged externally with respect thereto,
- an electronic circuit for controlling the times for washing, sniffing, accumulation and the other required steps,
- an electronic circuit for communicating with the leak detection machine 6,
- an electronic circuit for communicating with the aspirator or aspirators 2a, 2b and/or 2c,
- an electronic circuit for remote reporting of the result of the test,
- rapid connection connectors 28 of the aspirator or aspirators 2a, 2b and/or 2c,
- a device for communicating with a pressurization unit 27 responsible for the flow of tracer gas inside the pipe 4.

Alternatively, the aspirators 2a, 2b and/or 2c and thus the device 1, can be used to test pipes 4 directly in their apparatus of usual operation without, therefore, it being necessary to remove them and connect them to the pressurization unit 27.

In this case, the tracer gas is substituted by the gas circulating in the apparatus in which they are installed.

In other words, if the pipe 4 is part of a cooling apparatus, such as for example a refrigerator, the tracer gas is constituted by the refrigerant gas of the cooling apparatus.

Similarly, if the pipe 4 is part of a fuel gas apparatus, such as for example a domestic apparatus for supplying gas to boilers and kitchens, the tracer gas is constituted directly by the fuel gas used in the apparatus.

Operation of the device 1 for detecting gas leaks, particularly for joints of pipes and the like, is the following.

Initially, the system aspirates the air from the surrounding environment of the region where the aspirator will be mounted, while simultaneously performing the back-washing of the pipes and of the suction channels 20 and of the accumulation chamber 7, so as to clean them of any residual traces left from previous aspirations.

Such aspiration of the air of the surrounding outside environment is necessary in order to reset the analysis parameters of the leak detection machine 6.

Once the washing is complete, the third LED 26 is switched on with a steady light, in order to authorize the operator to mount the aspirator 2a, 2b or 2c onto the pipe 4 to be checked.

According to the type of aspirator used, this mounting step can involve opening the jaws 9 and 10 of the clamp 8, for the aspirator 2b, or making the pipe 4 penetrate inside the accumulation chamber 7 of the hollow body 19 by piercing the wall 13 by elastic deformation, for the aspirator 2a.

Once the pipe 4 is placed in the accumulation chamber 7, the detection means 21 detect the presence of the pipe 4 and begins the work cycle which involves, initially, starting the pressurization of the tracer gas in the component to be checked using the pressurization unit 27.

Subsequently, the aspiration is performed of the air sample present in the accumulation chamber 7 which was previously accumulated for a length of time set in advance by the operator, on the principle that the longer the accumulation time, the greater the concentration of the tracer gas inside the accumulation chamber 7.

The measurement assembly 5 advises the leak detection machine 6 of the imminent arrival of the air sample taken before the machine begins the analysis of that sample.

Once the analysis is complete, the result thereof is interpreted by the measurement assembly 5 which sends the outcome, positive or negative, to the aspirator by switching on either the first LED 24, in the event of a negative outcome, or the second LED 25, in the event of a positive outcome, thus immediately advising the operator whether the joint 3 of the pipe 4 has passed the test.

Subsequently, by making the third LED 26 flash, the operator is authorized to remove the aspirator from the joint 3 of the pipe 4.

The detection means 21 notice the withdrawal of the pipe 4 from the accumulation chamber 7 and the measurement assembly 5 commands the washing of the pipes and of the suction channels 20, as well as the aspiration of the air of the outside environment, thus automatically resetting the whole system for a new test.

Conveniently, the washing of the pipes and of the suction channels 20 occurs against the flow with a gas other than the tracer gas so as to eliminate the smallest trace thereof.

In practice it has been found that the device for detecting gas leaks, particularly for joints of pipes and the like, according to the present invention, fully achieves the intended aim and objects in that, being capable of substituting the sniffer probes that work in combination with leak detection machines, it increases the sensitivity thereof thus solving all errors of application of aspirators caused by the negligence and/or scant training of the operator and transforming the test from subjective, as in the prior art, to objective.

This is made possible thanks to the simple shape of the aspirator which defines inside it the accumulation chamber, which is adapted to accommodate pipes of different sizes, differently from many apparatuses belonging to the prior art which require specially-constructed accumulation chambers. Such contrivance makes it possible to save a considerable amount of time with respect to the prior art.

In this manner the operator need only mount the aspirator on the joint of the pipe to be checked, and the system, thanks to the presence of the detection means, automatically carries out the accumulation and enables the aspiration of the accumulated gas by the leak detection machine, which will analyze the concentration of the sample taken, automatically determining the status of the examined joint, and operating autonomously so as to reduce as far as possible the intervention of the operator and eliminate at source all errors of evaluation due to the operator which, being human, he/she can make.

It should be emphasized how much the introduction of detection means comprising two electrically conducting elements enables the automation described above in a manner that is not obvious to the person skilled in the art who, as described in the initial preamble, manually performs and/or starts all the individual operations required for the detection of gas leaks in joints of pipes and the like.

The device for detecting gas leaks, particularly for joints of pipes and the like, thus conceived is susceptible of numerous modifications and variations all of which are within the scope of the appended claims.

Moreover, all the details may be substituted by other, technically equivalent elements.

In practice the materials employed, provided they are compatible with the specific use, and the contingent dimensions and shapes, may be any according to requirements.

The content of Italian patent application no. MI2011A000132, the priority of which is claimed in the present application, is incorporated as a reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A device (1) for detecting gas leaks, particularly for joints of pipes and the like, comprising at least one aspirator (2a, 2b, 2c), which can be coupled to a joint (3) of a pipe (4) through which a tracer gas flows, is adapted to take a sample of the air surrounding said joint (3) and is functionally connected to a leak detection machine (6) which is adapted to analyze said air sample taken by said at least one aspirator (2a, 2b, 2c) in order to determine the presence and concentration of said tracer gas within said air sample, **characterized in that** it comprises an accumulation chamber (7) which is defined inside said aspirator (2a, 2b, 2c) and is adapted to accommodate part of said pipe (4) at said joint (3), means (21) being further comprised for detecting said pipe (4) in said accumulation chamber (7) which are functionally connected to a measurement assembly (5) in order to take the sample in the presence of said pipe (4) accommodated in said accumulation chamber (7).

2. The device (1) according to claim 1, **characterized in that** said detection means (21) comprise at least two electrically conducting elements (22), which are accommodated inside said accumulation chamber (7), said pipe (4), when accommodated in said accumulation chamber (7), being in contact with said at least two electrically conducting elements (22) for the passage of electric current from one element to the other and for the detection of said pipe (4).

3. The device (1) according to claim 1, **characterized in that** said accumulation chamber (7) is provided with at least one elastically deformable wall (13) which can be switched from an open configuration, for the insertion and exit of said pipe (4) with respect to said accumulation chamber (7), to a retention configuration, for the retention of said pipe (4) in said accumulation chamber (7), and vice versa, when the contact pressure between said pipe (4) and said at least one wall (13) exceeds a preset pressure value.

4. The device (1) according to one or more of the preceding claims, **characterized in that** said at least one wall (13) comprises two distinct portions (14, 15), which are substantially lip-shaped and in mutual contact, in said retention configuration, in order to seal said accumulation chamber (7), said two portions (14, 15) being, in said open configuration, mutually spaced in order to define an opening (16) for the passage of said pipe (4).

5. The device (1) according to one or more of the preceding claims, **characterized in that** said aspirator (2a) comprises a slender body (17), which can be gripped by an operator and has a substantially fork-shaped end, between the arms (18) of which a hollow body (19) is accommodated which defines inside it said accumulation chamber (7).

6. The device (1) according to one or more of the preceding claims, **characterized in that** said hollow body (19) is made of an elastically deformable material.

7. The device (1) according to one or more of claims 1 and 2, **characterized in that** said aspirator (2b) is a clamp (8) which has, on its jaws (9, 10), two mutually facing half-shells (11, 12) which can mutually engage in order to define inside them said accumulation chamber (7), said pipe (4) being interposable between said half- shells (11, 12).

8. The device (1) according to claims 6 or 7, **characterized in that** it comprises a plurality of suction channels (20), which lead into said accumulation chamber (7) and are connected to said leak detection machine (6) in order to aspirate said air sample, said suction channels (20) being substantially distributed uniformly in said accumulation chamber (7).

9. The device (1) according to one or more of the preceding claims, **characterized in that** it comprises at least one measurement assembly (5), which is interposed between said aspirator (2a, 2b, 2c) and said leak detection machine (6).

10. The device (1) according to one or more of claims 1 to 8, **characterized in that** said measurement assembly (5) is integrated in said leak detection machine (6).

11. The device (1) according to one or more of claims 1 to 8, **characterized in that** said measurement assembly (5) is integrated in said aspirator (2a, 2b,2c).

12. The device (1) according to claim 9 or 10 or 11, **characterized in that** said measurement assembly (5) comprises means for the management and control of said aspirator (2a, 2b, 2c) and of said leak detection machine (6) for the automatic operation of said device (1).

13. The device (1) according to claim 9 or 10 or 11, **characterized in that** it comprises means (23) for indicating leaks of tracer gas following the analysis performed by said leak detection machine (6) and the conclusion of said analysis.
